# EUROPÄISCHE PATENTSCHRIFT

(11) **EP 2 669 219 B1**
(45) Veröffentlichungstag und Bekanntmachung des Hinweises auf die Patenterteilung: **31.08.2016**
(21) Anmeldenummer: 13170306.8
(22) Anmeldetag: 03.06.2013
(51) Int. Cl.: B65G 21/22

(54) **Trag- und/oder Gleitelement, Verwendung solches Elementes und Verwendung eines Holz-Kunststoff-Verbundwerkstoffes zur Herstellung solches Elementes**
Supporting and/or sliding element, use of such element and use of a wood-plastic-composite to manufacture such element
Elément de support et/ou de glissement, utilisation d'un tel élément et utilisation d'un composite bois-plastique pour la confection d'un tel élément

(30) Priorität: 01.06.2012 DE 102012209287
(43) Veröffentlichungstag der Anmeldung: 04.12.2013
(73) Patentinhaber: Novo-Tech GmbH & Co. KG, 06449 Aschersleben (DE)
(72) Erfinder: Wurlitzer, Holger, 08058 Zwickau (DE); Eichhorn, Sven, 08606 Mühlental / OT Zaulsdorf (DE); Clauss, Brit, 09496 Marienberg (DE); Nendel, Klaus, 09569 Oederan (DE); Gehde, Michael, 09127 Chemnitz (DE)
(74) Vertreter: Dantz, Jan Henning

(56) Entgegenhaltungen:
- EP-A2- 1 188 693
- WO-A1-02/00484
- WO-A1-03/008494
- WO-A1-2005/088020
- CN-A- 102 441 974
- US-A1- 2003 154 662
- US-A1- 2010 043 339

## Beschreibung

Die Erfindung bezieht sich auf ein Trag- und/oder Gleitelement zur Verwendung in der Fördertechnik nach dem Oberbegriff des Anspruches 1.

Die US 2003/0154662 offenbart einen Bodenbelag mit extrudierten Paneelen aus einer Mischung aus Kunststoff und Holzfasern, die über ein mechanisches Befestigungssystem an einer Unterkonstruktion festgelegt werden. Die Paneelehaben die strukturellen Merkmale des Oberbegriffes des Anspruchs 1.

Die WO 02/00484 offenbart eine Fördereinrichtung mit einer Laufschiene, an der Führungsflächen für Laufwerke von Fördergutträgern ausgebildet sind. Bei der Fördereinrichtung sollen Stoßbelastungen der Fördergutträger zur Verringerung des Verschleißes reduziert werden. Eine Verwendung nach dem Oberbegriff des Anspruchs II wird in diesem Dokument offenbart.

Bei Trag- und Gleitelementen nach dem Stand der Technik ist eine Funktionstrennung vorgesehen, so ist eine tragende, meist metallische, Struktur mit einer meist aus Kunststoff bestehenden Führungs- oder Gleitschiene verbunden. Diese Schiene führt das Zugmittel und erfüllt die tribologischen Anforderungen.

Um das beispielsweise aus Riemen, Rollen- oder Gleitketten bestehende Zugmittel abzustützen, werden in der Regel Kunststoffschienen aus hochmolekularen Polyethylen (PE-UHMW) oder Polyethylen (PE) verwendet. Diese Werkstoffe besitzen vorteilhafte tribologische Eigenschaften. Für Bauteile mit tragender Funktion sind diese Werkstoffe aufgrund ihrer Eigenschaften (geringer E-Modul, geringe Bruchfestigkeit) jedoch ungeeignet.

Bei den tribologischen Beanspruchungen ist weiterhin noch zwischen auftretender Gleitreibung (z.B. bei Gleitketten) und auftretender Rollreibung (z.B. beim Einsatz von Rollen als Transportelemente) zu unterscheiden. Bei Fördersysteme, in denen Transportrollen verwendet werden, tritt Gleitreibung weitestgehend nur an Übergangsstellen, engen Kurven oder großen Steigungen auf.

Nachteilig an der bekannten Funktionstrennung ist der erhöhte Fertigungsaufwand der Einzelkomponenten in Verbindung mit hohen Kosten für die verwendeten Materialien. Zusätzliche Kosten entstehen bei der Montage der Einzelteile. Zudem ist insbesondere die metallische tragende Struktur in bei der Herstellung energieintensiv und damit umweltbelastend.

Aufgabe der vorliegenden Erfindung ist es, ein kostengünstiges und einfach zu fertigendes Trag- und/oder Gleitelement zur Verwendung in der Fördertechnik vorzuschlagen, das sowohl den mechanischen als auch tribologischen Anforderungen in Fördersystemen gerecht wird und zudem umweltfreundlich in der Herstellung ist.

Erfindungsgemäß wird diese Aufgabe gelöst durch ein Trag- und/oder Gleitelement mit den Merkmalen des Anspruches 1. Diese Aufgabe wird ferner durch die Verwendung eines Trag-und/oder Gleitelementes nach Anspruch 11 und durch die Verwendung eines Holz-Kunststoff-Verbundwerkstoffes nach Anspruch 12 gelöst. Bevorzugte Ausgestaltung der Erfindung sind Gegenstand von Unteransprüchen.

Das erfindungsgemäße Trag- und Gleitelement ist einteilig und monolithisch aufgebaut und aus naturfaserverstärktem Kunststoff gefertigt. Einteilig und monolithisch bedeutet hier, dass sowohl die Gleitfunktion als auch die tragende Funktion durch die Struktur aus naturfaserverstärktem Kunststoff erfüllt werden. Dies wird insbesondere dadurch erreicht, dass das Querschnittsprofil des Tragund Gleitelements eine ausreichende mechanische Festigkeit und Steifigkeit zur Aufnahme der auftretenden Lasten aufweist und zudem Laufflächen bzw. Auflageflächen für Transportelemente wie Rollen, Gleitketten oder Riemen hat. Zur Gewährleistung von Zusatzfunktionen kann das erfindungsgemäße Trag- oder Gleitelement jedoch zusätzliche Anbauteile aufweisen.

Naturfaserverstärkter Kunststoff ist im Sinne dieser Anmeldung ein Kunststoff, vorzugsweise ein Polymer, das mit Naturfasern verstärkt ist. Als Naturfasern kommen insbesondere lignozellulosehaltige Werkstoffe, beispielsweise Holz-, Jute-, Flachs-, Hanf-, Bambus-, oder Kenaffasern in Betracht, bevorzugt finden jedoch Holzfasern Anwendung, da diese im Verbund mit Kunststoff nachweisbar vorteilhafte tribologische Eigenschaften besitzen.

Das erfindungsgemäße Trag- und/oder Gleitelement wird in einem Arbeitsschritt mittels Extrusion hergestellt. Dadurch kann das Trag- und/oder Gleitelement schienenförmig in großer Länge hergestellt werden, um dann in einem Fördersystem montiert zu werden. Dies ist einfach und kostengünstig, insbesondere auch da naturfaserverstärkte Kunststoffe erheblich preiswerter als herkömmlich verwendete Metalle (z.B. Aluminium) sind. Zudem besteht keine Gefahr von Korrosion durch herabfallende Metallspäne, die im Gebrauch an Reibungsoberflächen entstehen können. Naturfaserverstärkte Kunststoffe lassen sich durch die gezielte Auswahl ihrer Bestandteile sowie Hinzugabe von Additiven, beispielsweise Haftvermittlern, Brandhemmern oder Mitteln zur Verbesserung der Witterungs- und UV-Beständigkeit, gezielt für den Anwendungsfall modifizieren. Zudem ist der Werkstoff durch bekannte Verfahren aus der Kunststofftechnik, wie beispielsweise Extrusion, Spritzgießen oder Presstechniken hervorragend formbar. Dadurch können auch gebogene Trag- oder Gleitelemente für Kurven oder Weichen gut hergestellt werden.

Erfindungsgemäß weist das Trag- und Gleitelement mindestens drei über- oder nebeneinander angeordneten Kammern auf. Darüber hinaus hat dabei mindestens eine der mittleren Kammern (also die zwischen den äußeren Kammern liegenden) Seitenwände, die derart auskragen, dass Laufflächen für Transportrollen oder -Ketten ausgebildet werden. Da diese durch die Schwerkraft an den Auflageflächen anliegen, müssen die Laufflächen in Einbauposition gesehen seitlich aus der Struktur auskragen. Vorteilhaft an einer schrägen Ausrichtung der Laufflächen ist, dass eine beidseitige Zentrierung der Transportrollen oder -Ketten erfolgt.

Weiterhin bevorzugt ist das Querschnittsprofil bezogen auf die in Einbauposition gesehen vertikale Mittellinie symmetrisch. Dadurch treten bei symmetrischen Belastungen keine Biegemomente um die Längsachse des Trag- und Gleitelementes auf.

Besonders bevorzugt hat mindestens eine der mittlere Kammern seitlich (in Einbauposition gesehen) auskragende Seitenwände, so dass diese eine Auflagefläche (Roll- oder Gleitfläche) für Transportelemente bildet. Diese Auflageflächen sind bevorzugt eben ausgebildet, können jedoch beispielsweise auch Führungsnuten für Rollen oder ähnliches aufweisen.

Bevorzugt sind die beiden äußeren Kammern rund, insbesondere kreisförmig abgeschlossen Somit ist das Trag- und Gleitelement an seinen außen liegenden Flächen rund abgeschlossen (bezogen auf die Längsachse des Trag- und Gleitelements als Mittelpunkt). So kann ein besonders vorteilhafter Kraftfluss gewährleistet werden und zudem wird das Handling beim Einbau verbessert.

In einer weiterhin besonders bevorzugten Ausgestaltung ist mindestens ein Bereich des Trag- und/oder Gleitelementes als Kabelkanal ausgebildet. Der Bereich kann ein offener oder auch geschlossener Bereich des Querschnittsprofils sein. Vorteilhaft können Kabel so, insbesondere bei einem geschlossenen Profilbereich, geschützt verlegt werden. Zusätzlich ist die Verlegung sehr einfach und die Struktur wird nicht durch die Befestigung von Klammern oder ähnlichem geschwächt. Es können jedoch auch, beispielsweise bei der Verlegung in einem offenerem Bereich Klammern am Trag- und Gleitelement befestigt werden.

Weiterhin bevorzugt ist mindestens eine Kammer als Druckkammer zum Transport gasförmiger oder flüssiger Medien ausgebildet ist. Druckkammer bedeutet hier, dass die Kammer gas- bzw. flüssigkeitsdicht ist, und somit zum Transport der jeweiligen Medien geeignet ist. Es kann beispielsweise über die Transportlänge des Trag- und Gleitelementes eine Versorgung mit Druckluft für pneumatische Anlagen und ähnliches vorgesehen werden. Vorteilhaft können so Kosten für Extra Leitungen gespart werden.

Die Verwendung der Profilstruktur des Trag- und Gleitelementes als Medienleitung, beispielsweise für Kabel oder auch Gase oder Flüssigkeiten reduziert notwendige Installationsarbeiten und damit verbundene Kosten. Vorteilhaft können die Trag- und Gleitelemente schon vor der Installation des Fördersystems mit den vorgesehen Kabeln und den notwendigen Einrichtungen für die Ausbildung als Druckkammer, wie Anschlüsse und Ventile, versehen und getestet werden, was den Arbeitsaufwand bei der Installation vor Ort erheblich minimiert.

Besonders bevorzugt ist das Matrixmaterial des naturfaserverstärkten Kunststoffes ein Polymer, insbesondere Polyethylen (PE), Polypropylen (PP), Polyoxymethylen (POM) oder Polyvinylchlorid (PVC).

Weiterhin bevorzugt, beträgt der Masseanteil Naturfasern von 5-90 Ma%, bevorzugt 40 - 85 Ma%, besonders bevorzugt 60 - 80 Ma%. Vorteilhaft können so sehr gute tribologische und mechanische Eigenschaften verbunden werden.

Besonders bevorzugt wird der naturfaserverstärkte Kunststoff nach einem Verfahren entsprechend der WO 2008/058609 A2, insbesondere nach den Ansprüchen 1 bis 3, hergestellt. Dabei kommen Pflanzen- bzw. Holzpartikel mit einem Masseanteil von mindestens 60 %, bevorzugt von mindestens 65 % zum Einsatz. Dabei wird der Kunststoff vor der Mischung mit den Holz- bzw. Pflanzenpartikeln verflüssigt und anschließend mit den Holz- bzw. Pflanzenpartikeln gemischt, diese Mischung homogenisiert und verdichtet.

Nach der Verdichtung kann die Mischung einem Extruder zur Formung des Trag- und Gleitelements zugeführt werden.

Die Naturfasern als Verstärkungsmaterial haben dabei eine bevorzugte Faserlänge von 0,1 bis 7 mm, bevorzugt von 0,2 bis 5 mm und weiterhin bevorzugt von 0,2 bis 3,5 mm. Besonders bevorzugt kommen Naturfasern mit einer Partikelgröße von unter 1 mm, bevorzugt unter 0,8 mm und besonders bevorzugt zwischen 0,3 mm und 0,4 mm zum Einsatz. So ist vorteilhaft eine sehr gute Verarbeitbarkeit gewährleistet. Besonders bevorzugt wird Holzmehl aus Holzfasern aus Nadelholzgemisch eingesetzt, dieses ist besonders kostengünstig und sehr gut verfügbar. Vorteilhaft kann bei dem erfindungsgemäßen Trag- und Gleitelement die Geometrie an beliebige Querschnittsformen für die Verwendung in anderen Arten von Stetigfördersystemen angepasst werden, bei denen bisher die bereits beschriebene Funktionstrennung angewandt wird. Ausführungsbeispiele sind rechteckige oder kreisförmige Querschnitte mit Führungsnuten für das Zugmittel oder die Rollen.

Besonders bevorzugt wird das Trag- und/oder Gleitelement mittels Profilextrusion hergestellt und in Hängefördersystemen eingesetzt.

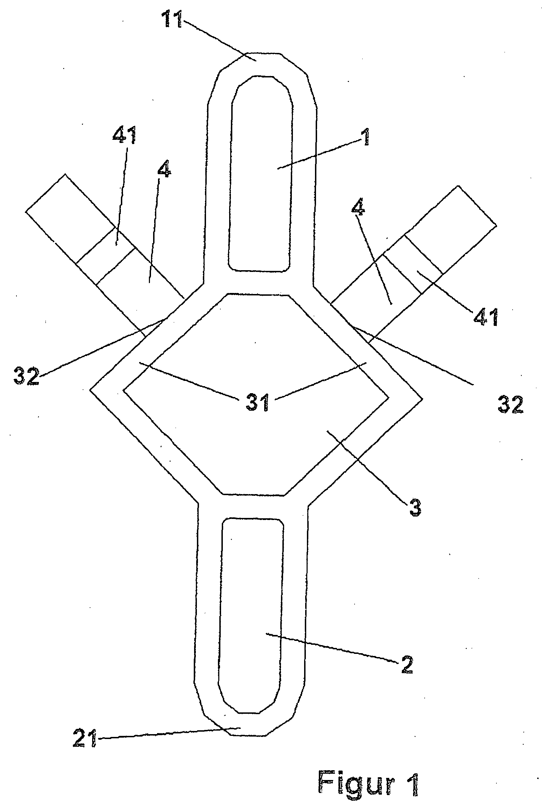

Nachfolgend wird ein Ausführungsbeispiel der Erfindung anhand einer Figur erläutert. Dabei zeigt
- Figur 1: eine Querschnittsdarstellung eines erfindungsgemäßen Trag- und Gleitelementes mit Rollen als Transportelementen.

Figur 1 zeigt eine Darstellung des Querschnitts eines erfindungsgemäßen Trag- und/oder Gleitelements. Das Trag- und/oder Gleitelement besteht aus einer Mischung aus Naturstoffen und einem Polymer und ist durch Extrusion hergestellt. Das Trag- und/oder Gleitelement kann als Schiene eines Fördersystems eingesetzt werden und kann eine größere Länge von mehr als zwei Metern aufweisen, beispielsweise zwischen zwei und sechs Metern. Für den Betrieb wird das Trag- und/oder Gleitelement an einer Tragkonstruktion montiert und ein oder mehrere Förderelemente können gleitend oder rollend entlang des Trag- und/oder Gleitelementes verfahren werden, insbesondere für industrielle Anwendungen in Produktionsstraßen. Die Förderelemente können insbesondere hängend an dem Trag- und/oder Gleitelement gelagert sein, um Bauteile unterhalb des Trag- und/oder Gleitelementes zu fördern.

Das Trag- und Gleitelement hat drei Kammern, eine obere Kammer 1, eine mittlere Kammer 3 und eine untere Kammer 2. Die obere Kammer 1 hat an ihrer oberen Außenseite eine runde Außenwand 11. Ebenso hat die untere Kammer 2 eine runde Außenwand 21.

Die mittlere Kammer 3 hat seitlich auskragende Seitenwände 31, die somit Auflageflächen 32 für Rollen 4 bilden. Die Rollen 4 haben Achsen 41. Die Rollen sind aus Kunststoff oder Metall gefertigt.

Die Wandstärke des Trag- und Gleitelementes beträgt 1 - 50 mm, insbesondere 3mm bis 30mm.

Das Trag- und Gleitelement wird mit Inserts aus Metall oder Kunststoff bzw. speziellen Düben versehen und über Schrauben an der Decke des Gebäudes oder einer Aufständerung befestigt.

In dem dargestellten Ausführungsbeispiel ist das Trag-und/oder Gleitelement ein mit Hohlkammern ausgebildetes Extrusionsprofil. Es ist auch möglich jedoch nicht erfindungsgemäß, das Trag- und/oder Gleitelement ohne Hohlkammern auszubilden, beispielsweise als Doppel-T-Profil oder T-Profil, um entsprechende Laufbahnen für Förderelemente bereitzustellen. Auch andere Querschnittsformen können natürlich eingesetzt werden.

### Bezugszeichen liste

- 1: erste Kammer
- 11: runde Außenwand
- 2: zweite Kammer
- 21: runde Außenwand
- 3: dritte Kammer
- 31: auskragende Seitenwand
- 32: Auflagefläche
- 4: Rolle
- 41: Rollenachse

## Patentansprüche

1. Einteiliges Trag- und/oder Gleitelement als Schiene eines Fördersystems, wobei das Trag- und/oder Gleitelement mittels Extrusion aus naturfaserverstärktem Kunststoff hergestellt und die tragende Funktion des Trag- und/oder Gleitelements ausschließlich durch den naturfaserverstärktem Kunststoff gewährleistet ist, und das Profil des Trag-und/oder Gleitelementes derart ausgestaltet ist, dass Laufflächen (32) für Transportelemente wie Rollen (4), Ketten oder Riemen gebildet sind, **dadurch gekennzeichnet dass** mindestens drei über- oder nebeneinander angeordnete Kammern (1,2,3) vorgesehen sind und mindestens eine der mittleren Kammern (3) Seitenwände (31) aufweist, die derart auskragen, dass Laufflächen (32) für Transportelemente wie Rollen (4), Ketten oder Riemen ausgebildet werden.

2. Einteiliges Trag- und/oder Gleitelement nach Anspruch 1, **dadurch gekennzeichnet, dass** der naturfaserverstärkte Kunststoff ein Holz-Kunststoff-Verbundwerkstoff (WPC - Wood Polymer Composite) ist.

3. Trag- und/oder Gleitelement nach Anspruch 1 oder 2, **dadurch gekennzeichnet, dass** das Querschnittsprofil mindestens einen geschlossenen Bereich aufweist, also mindestens eine der Kammern (1,2,3), die über die gesamte Länge des Trag- und Gleitelementes reichtund geschlossen ist.

4. Trag- und/oder Gleitelement nach einem der vorangehenden Ansprüche, **dadurch gekennzeichnet, dass** mindestens ein Bereich, insbesondere eine der Kammern (1,2,3) als kabelkanal ausgebildet ist.

5. Trag- und/oder Gleitelement nach Anspruch 3, **dadurch gekennzeichnet, dass** mindestens eine der Kammern (1,2,3) als Druckkammer zum Transport gasförmiger oder flüssiger Medien ausgebildet ist.

6. Trag- und/oder Gleitelement nach einem der vorangehenden Ansprüche, **dadurch gekennzeichnet, dass** das Querschnittsprofil bezogen auf die in Einbauposition gesehen senkrechte Mittellinie symmetrisch ist, und mindestens eine mittlere Kammer (3) mit schräg auskragenden Seitenwände (31) hat.

7. Trag- und/oder Gleitelement nach einem der vorangehenden Ansprüche, **dadurch gekennzeichnet, dass** die beiden äußeren Kammern (1,2) rund, insbesondere kreisförmig abgeschlossen sind.

8. Trag- und/oder Gleitelement nach einem der vorangehenden Ansprüche, **dadurch gekennzeichnet, dass** das Matrixmaterial des Holz-Kunststoff-Verbundwerkstoffs ein Polymer z.B. Polypropylen (PP), Polyethylen (PE), Polyoxymethylen (POM) oder Polyvinylchlorid (PVC) ist.

9. Trag- und/oder Gleitelement nach Anspruch 8, **dadurch gekennzeichnet, dass** das Polymer mit einem Masseanteil von 5 - 90 Ma%, bevorzugt 40 - 85 Ma%, besonders bevorzugt 60 - 80 Ma% Holzfasern verstärkt ist.

10. Trag- und/oder Gleitelement nach einem der vorangehenden Ansprüche, **dadurch gekennzeichnet, dass** die Holzfasern aus Nadelholzgemisch mit einer Faserlänge von 0,1 bis 7 mm, bevorzugt von 0,2 bis 5 mm und besonders bevorzugt von 0,2 bis 3,5 mm sind.

11. Verwendung eines einteiligen Trag- und/oder Gleitelements als Schiene eines Fördersystems in Stetigfördersystemen, insbesondere Hängefördersystemen, wobei das Profil des Trag- und/oder Gleitelementes derart ausgestaltet ist, dass Laufflächen (32) für Transportelemente wie Rollen (4), Ketten oder Riemen gebildet sind, **dadurch gekennzeichnet, dass** das Trag- und/oder Gleitelement mittels Extrusion aus naturfaserverstärktem Kunststoff hergestellt ist und die tragende Funktion des Trag- und/oder Gleitelements ausschließlich durch den naturfaserverstärktern Kunststoff gewährleistet ist.

12. Verwendung eines Holz-Kunststoff-Verbundwerkstoffes zur Herstellung eines einteiligen Trag- und/oder Gleitelementes für Stetigfördersysteme, insbesondere Hängefördersysteme.

## Claims

1. An integral supporting and/or sliding element as a rail of a conveying system, wherein the supporting and/or sliding element is produced by means of extrusion from natural-fibre reinforced plastic, and the supporting function of the supporting and/or sliding element is solely ensured by the natural-fibre reinforced plastic, and the profile of the supporting and/or sliding element is formed in such a way that running faces (32) for transport elements such as rollers (4), chains or belts are formed, **characterized in that** at least three chambers (1, 2, 3) which are arranged on top of each other or next to one another are provided, and at least one of the middle chambers (3) comprises side walls (31) which protrude in such a way that running faces (32) are formed for transport elements such as rollers (4), chains or belts.

2. An integral supporting and/or sliding element according to claim 1, **characterized in that** the natural-fibre reinforced plastic is a wood polymer composite (WPC).

3. A supporting and/or sliding element according to claim 1 or 2, **characterized in that** the cross-sectional profile comprises at least one closed region, i.e. at least one of the chambers (1, 2, 3) which reaches over the entire length of the supporting and sliding element and is closed.

4. A supporting and/or sliding element according to one of the preceding claims, **characterized in that** at least one region, especially one of the chambers (1, 2, 3), is formed as a cable duct.

5. A supporting and/or sliding element according to claim 3, **characterized in that** at least one of the chambers (1, 2, 3) is formed as a pressure chamber for conveying gaseous or liquid media.

6. A supporting and/or sliding element according to one of the preceding claims, **characterized in that** the cross-sectional profile is symmetric in relation to the perpendicular middle line as seen in the installed position and comprises at least one middle chamber (3) with obliquely protruding side walls (31).

7. A supporting and/or sliding element according to one of the preceding claims, **characterized in that** the two outer chambers (1, 2) are terminated in a round manner, especially circularly.

8. A supporting and/or sliding element according to one of the preceding claims, **characterized in that** the matrix material of the wood polymer composite is a polymer such as polypropylene (PP), polyethylene (PE), polyoxymethylene (POM) or polyvinyl chloride (PVC).

9. A supporting and/or sliding element according to claim 8, **characterized in that** the polymer is reinforced with wood fibres with a mass fraction of 5 to 90% by weight, preferably 40 to 85% by weight, more preferably 60 to 80% by weight.

10. A supporting and/or sliding element according to one of the preceding claims, **characterized in that** the wood fibres are made from a coniferous wood mixture with a fibre length of 0.1 to 7 mm, preferably 0.2 to 5 mm, and more preferably 0.2 to 3.5 mm.

11. The use of an integral supporting and/or sliding element as a rail of a conveying system in continuous-action conveying systems, especially suspended conveyor systems, wherein the profile of the supporting and/or sliding element is formed in such a way that running faces (32) for transport elements such as rollers (4), chains or belts are formed, **characterized in that** the supporting and/or sliding element is produced by means of extrusion from natural-fibre reinforced plastic, and the supporting function of the supporting and/or sliding element is solely ensured by the natural-fibre reinforced plastic.

12. The use of a wood composite material for producing an integral supporting and/or sliding element for continuous-action conveyor systems, especially suspended conveyor systems.

## Revendications

1. Élément de support et/ou de glissement d'une seule pièce servant de rail dans un système de transport, lequel élément de support et/ou de glissement est fabriqué par extrusion à partir de plastique armé de fibres naturelles et la fonction de support de l'élément de support et/ou de glissement est exclusivement assurée par le plastique armé de fibres naturelles, et le profil de l'élément de support et/ou de glissement est conformé de manière à former des surfaces de circulation (32) pour des éléments de transport tels que des galets (4), des chaînes ou des courroies, **caractérisé en ce qu'**au moins trois compartiments (1, 2, 3) superposés ou juxtaposés sont prévus et au moins un des compartiments du milieu (3) présente des parois latérales (31) évasées de façon à former des surfaces de circulation (32) pour des éléments de transport tels que des rouleaux (4), des chaînes ou des courroies.

2. Élément de support et/ou de glissement d'une seule pièce selon la revendication 1, **caractérisé en ce que** le plastique armé de fibres naturelles est un composite de bois et de plastique (WPC : Wood Polymer Composite).

3. Élément de support et/ou de glissement selon la revendication 1 ou 2, **caractérisé en ce que** le profil en section présente au moins une partie fermée, autrement dit au moins un des compartiments (1, 2, 3) qui s'étend sur toute la longueur de l'élément de support et de glissement et qui est fermé.

4. Élément de support et/ou de glissement selon l'une des revendications précédentes, **caractérisé en ce qu'**au moins une partie, en particulier un des compartiments (1, 2, 3), est conformée comme une goulotte de câbles.

5. Élément de support et/ou de glissement selon la revendication 3, **caractérisé en ce qu'**au moins un des compartiments (1, 2, 3) est conçu comme un compartiment sous pression pour le transport de fluides gazeux ou liquides.

6. Élément de support et/ou de glissement selon l'une des revendications précédentes, **caractérisé en ce que** la section en profil est symétrique par rapport à l'axe médian vertical dans la position d'installation et au moins un compartiment du milieu (3) a des parois latérales (31) qui s'évasent à l'oblique.

7. Élément de support et/ou de glissement selon l'une des revendications précédentes, **caractérisé en ce que** les deux compartiments extérieurs (1,2) sont fermés par un arrondi, de préférence circulaire.

8. Élément de support et/ou de glissement selon l'une des revendications précédentes, **caractérisé en ce que** le matériau de matrice du composite de bois et de plastique est un polymère, par exemple du polypropylène (PP), du polyéthylène (PE), du polyoxyméthylène (POM) ou du polychlorure de vinyle (PVC).

9. Élément de support et/ou de glissement selon la revendication 8, **caractérisé en ce que** le polymère est renforcé de fibres de bois dans une proportion de la masse de 5 à 90 % de la masse, de préférence de 40 à 85 % de la masse, en particulier de 60 à 80 % de la masse.

10. Élément de support et/ou de glissement selon l'une des revendications précédentes, caractérisé en ce les fibres de bois se présentent sous la forme d'un mélange d'aiguilles de bois ayant une longueur de fibres de 0,1 à 7 mm, de préférence de 0,2 à 5 mm et en particulier de 0,2 à 3,5 mm.

11. Utilisation d'un élément de support et/ou de glissement d'une seule pièce comme rail d'un système de transport dans des systèmes de convoyeur en continu, en particulier des systèmes de convoyeur suspendu, dans laquelle le profil de l'élément de support et/ou de glissement est conformé de manière à former des surfaces de circulation (32) pour des éléments de transport tels que des galets (4), des chaînes ou des courroies, **caractérisée en ce que** l'élément support et/ou de glissement est fabriqué par extrusion à partir de plastique armé de fibres naturelles et la fonction de support de l'élément de support et/ou de glissement est exclusivement assurée par le plastique armé de fibres naturelles.

12. Utilisation d'un matériau composite à base de bois et de plastique pour la fabrication d'un élément de support et/ou de glissement d'une seule pièce pour des systèmes de convoyeur en continu, en particulier des systèmes de convoyeur suspendu.
